# EUROPÄISCHE PATENTANMELDUNG

(11) **EP 0 969 254 A2**
(43) Veröffentlichungstag der Anmeldung: **05.01.2000**
(21) Anmeldenummer: 99890198.7
(22) Anmeldetag: 18.06.1999
(51) Int. Cl.: F24F 5/00

(54) **Element für eine Anlage zur Klimatisierung insbesondere Beheizung, von Räumen**

(30) Priorität: 03.07.1998 AT 116798
(71) Anmelder: Sommerhuber Keramik Gesellschaft m.b.H., 4400 Steyr (AT)
(72) Erfinder: Weiermayer, Christophe, 4810 Gmunden (AT)
(74) Vertreter: Wildhack, Helmut, Dr. Dipl.-Ing.

(57) **Zusammenfassung**

Ein Element für eine Anlage zur Beheizung von Räumen weist einen Grundkörper (1) auf, in dem Nuten (2, 3) angeordnet sind. Benachbarte Nuten (2) werden durch bogenförmige Vertiefungen (4), benachbarte Nuten (3) durch bogenförmige Vertiefungen (5) miteinander verbunden. Die bogenförmigen Vertiefungen (4, 5) sind versetzt angeordnet. In die Nuten (2, 3) und die bogenförmigen Vertiefungen (4, 5) wird ein biegbarer, ein Wärmeträgermedium transportierender Schlauch eingelegt. Durch die alternierende Anordnung der Nuten (2, 3) ist der erforderliche Krümmungsradius der bogenförmigen Vertiefungen (4, 5) sichergestellt, ein Abknicken des biegbaren Schlauches und eine dadurch bedingte Verringerung des Querschnittes wird somit vermieden.

## Beschreibung

Die Erfindung betrifft ein Element für eine Anlage zur Klimatisierung, insbesondere zur Beheizung, von Räumen, mit in einem Grundkörper angeordneten Nuten, die endseitig durch bogenförmige Vertiefungen miteinander verbunden sind, wobei in die Nuten und bogenförmigen Vertiefungen biegbare Heiz- und/oder Kühlelemente, insbesondere ein flüssiges oder gasförmiges Wärmeträgermedium enthaltende biegbare Schläuche oder elektrische Heizleiter, einsetzbar sind.

Derartige Elemente sind bereits bekannt und werden insbesondere für Wandheizungen verwendet, wobei derartige Wandheizungen ein behagliches Raumklima sicherstellen. Hiebei werden in die Nuten und die diese Nuten verbindenden bogenförmigen Vertiefungen der an der Wand befestigten Grundkörper ein Wärmeträgermedium transportierende biegbare Schläuche oder elektrische Widerstandsheizdrähte mäanderförmig eingelegt. Der Grundkörper kann derart an der Wand befestigt werden, daß die mit den Nuten versehene Seite an der Wand anliegt, es ist aber häufig zweckmäßiger, die von der Wand abgewendete Seite des Grundkörpers mit den Nuten zu versehen, und, nach dem Einlegen und Fixieren der biegbaren Schläuche bzw. elektrischen Widerstandsheizdrähte mit Kacheln zu verkleiden. Die Kacheln bilden nicht nur eine formschöne Verkleidung der betreffenden Wandstellen, sondern bewirken ähnlich wie bei einem Kachelofen eine Wärmespeicherung.

Um die erforderliche Wärmemenge zuzuführen, darf der Innendurchmesser der biegbaren Schläuche ein gewisses Maß nicht unterschreiten. Auch der Querschnitt der Widerstandsheizdrähte muß entsprechend dimensioniert sein. Dies hat zur Folge, daß der Abstand benachbarter, durch die bogenförmigen Vertiefungen miteinander verbundener Nuten entsprechend groß gehalten werden muß, da sonst die biegbaren Schläuche geknickt werden und dadurch der Durchfluß des Wärmeträgermediums behindert, wenn nicht überhaupt unterbunden wird. Der Abstand zwischen benachbarten Nuten kann aus diesem Grunde nicht beliebig klein gemacht werden. Der erforderliche große Abstand zwischen benachbarten Nuten hat aber zur Folge, daß keine gleichmäßige Erwärmung der Oberfläche erfolgt, was vor allem dann, wenn diese Oberfläche mit Personen in unmittelbare Berührung gelangt, wie dies beispielsweise dann der Fall ist, wenn sich diese Personen anlehnen, als unangenehm empfunden wird.

Die vorliegende Erfindung hat sich zur Aufgabe gestellt, diesen Nachteil zu vermeiden und ein Element für eine Anlage zur Klimatisierung, insbesondere zur Beheizung, von Räumen der eingangs beschriebenen Art zu schaffen, bei welchem der Abstand zwischen benachbarten Nuten und daher auch zwischen den in diese Nuten eingelegten Heiz- und/oder Kühlelementen verringert werden kann, ohne daß der erforderliche Krümmungsradius der bogenförmigen Vertiefungen unterschritten wird. Zur Lösung dieser Aufgabe schlägt die Erfindung vor, daß zwischen den ein erstes System bildenden Nuten weitere, ein zweites System bildende Nuten vorgesehen sind, die gleichfalls endseitig über weitere bogenförmige Vertiefungen miteinander verbunden sind, und daß zumindest an den Kreuzungspunkten die Nuten und/oder schlaufenförmigen Vertiefungen des einen Systems tiefer liegen als die Nuten und/oder schlaufenförmigen Vertiefungen des anderen Systems. Beim erfindungsgemäßen Element ist somit jeweils immer eine Nut des einen Systems einer Nut des anderen Systems benachbart, wobei dadurch, daß jeweils eine Verbindung nicht der unmittelbar nächsten, sondern der übernächsten Nut über die bogenförmigen Vertiefungen erfolgt, der erforderliche Krümmungsradius des Bogens gewährleistet ist. Dadurch, daß die Nuten und/oder schlaufenförmigen Vertiefungen des einen Systems zumindest an den Kreuzungspunkten tiefer liegen als die Nuten und/oder schlaufenförmigen Vertiefungen des anderen Systems, wird ein Vorbeiführen der Heiz- und/oder Kühlelemente an diesen Kreuzungspunkten ermöglich. Die erfindungsgemäße Ausbildung stellt somit eine gleichmäßigere Wärmeübertragung über die gesamte Fläche des Grundkörpers sicher.

Gemäß einer bevorzugten Ausführungsform der Erfindung sind die bogenförmigen Vertiefungen des ersten Systems gegenüber den bogenförmigen Vertiefungen des zweiten Systems versetzt angeordnet, sodaß die Kreuzungspunkte nicht im Bereich der bogenförmigen Vertiefungen beider Systeme liegen und damit die Herstellung der Nuten und Vertiefungen und die Führung der Heiz- und/oder Kühlelemente erleichtert wird.

Zweckmäßig ist die Anordnung so getroffen, daß die Nuten beider Systeme zueinander parallel und vorzugsweise in gleichen Abständen angeordnet sind.

Die beiden Systeme können parallel geschaltet sein. Es hat sich jedoch als zweckmäßig erwiesen, die beiden Systeme in Serie zu schalten, wobei das eine System den Zulauf und das andere System den Ablauf für das Wärmeträgermedium bildet. Dadurch wird eine Vergleichmäßigung der Wärmeübertragung erzielt, denn es wird die höhere Zulauftemperatur im einen System durch die geringere Ablauftemperatur in den benachbarten Nuten des anderen Systems kompensiert.

Wird, wie dies eine bevorzugte Anwendung darstellt, das Element als Wandelement verwendet, so sind erfindungsgemäß die Nuten beider Systeme im wesentlichen waagrecht in vertikalem Abstand voneinander angeordnet, wobei die oberste Nut des einen Systems mit der obersten Nut des anderen Systems in Verbindung steht und die untersten Nuten beider Systeme mit Öffnungen für die Zuleitung bzw. Ableitung der Heiz- und/oder Kühlelemente versehen sind.

In der Zeichnung ist die Erfindung anhand eines Ausführungsbeispieles schematisch dargestellt.

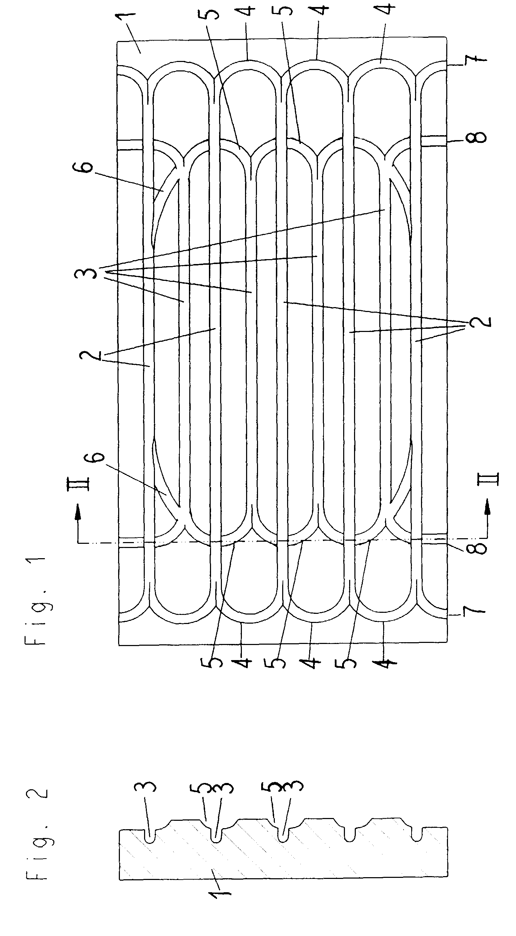

Fig. 1 zeigt eine Draufsicht auf die mit den Nuten versehene Seite eines erfindungsgemäßen Elementes und Fig. 2 stellt einen Schnitt nach der Linie II-II in Fig. 1 dar.

Das erfindungsgemäße Element besteht aus einem Grundkörper 1, in welchem Nuten 2, 3, eingearbeitet sind. Die Nuten 2 sind endseitig durch bogenförmige Vertiefungen 4, die Nuten 3 sind endseitig durch bogenförmige Vertiefungen 5 verbunden. Der Abstand der Nuten 2 ist so gewählt, daß die bogenförmigen Vertiefungen 4 den erforderlichen Krümmungsradius aufweisen. Dasselbe gilt für den Abstand der Nuten 3, der vorzugsweise gleich ist dem Abstand der Nuten 2.

Die Nuten 2 mit den bogenförmigen Vertiefungen 4 bilden ein erstes System, in das ein biegbarer, ein Wärmeträgermedium transportierender Schlauch mäanderförmig eingelegt ist, derart, daß er abwechselnd einmal über die in Fig. 1 links dargestellte bogenförmige Vertiefung 4 und einmal über die in Fig. 1 rechts dargestellte bogenförmige Vertiefung 4 in die jeweils benachbarte Nute 2 übergeht. Durch den eingehaltenen Krümmungsradius der bogenförmigen Vertiefung 4 wird ein Knicken des Schlauches verhindert.

Die Nuten 3 mit den bogenförmigen Vertiefungen 5 bilden ein zweites System, in welchem gleichfalls ein biegbarer Schlauch in derselben Weise, wie dies in Bezug auf das erste System beschrieben wurde, eingelegt ist. Wie aus Fig. 1 ersichtlich, sind jedoch die bogenförmigen Vertiefungen 5 des zweiten Systems gegenüber den bogenförmigen Vertiefungen 4 des ersten Systems seitlich versetzt angeordnet, sodaß die Herstellung der Nuten und der bogenförmigen Vertiefungen im Grundkörper 1 sowie das Einlegen des biegbaren Schlauches erleichtert wird. Wie aus Fig. 2 ersichtlich ist, liegen die Nuten 3 des ersten Systems an den Kreuzungsstellen mit dem zweiten System im Grundkörper 1 tiefer als die bogenförmigen Vertiefungen 5 des zweiten Systems, sodaß sich die eingelegten biegbaren Schläuche an diesen Kreuzungsstellen nicht behindern.

Wie bereits erwähnt, dient das erfindungsgemäße Element bevorzugt für die Herstellung einer Wandheizung, in welchem Fall der Grundkörper 1 beispielsweise mittels Schrauben an eine senkrechte Wand angeschraubt wird. Die Nuten 2, 3 verlaufen in diesem Fall im wesentlichen waagrecht und sind in gleichem vertikalen Abstand voneinander angeordnet. Die oberste Nut 2 des ersten Systems ist in diesem Fall zweckmäßig über eine Verbindungsnut 6 mit der obersten Nut 3 des zweiten Systems verbunden. Die untersten Nuten 2,3 beider Systeme stehen mit Öffnungen 7, 8 in Verbindung, über welche der biegbare Schlauch diesen untersten Nuten zugeführt wird. Bei dieser Ausführung ist es möglich, die beiden Systeme in Serie zu schalten. Dies heißt, daß der biegbare, das Wärmeträgermedium transportierende Schlauch zunächst über die Öffnung 7 der untersten Nut 2 des ersten Systems und anschließend über die weiteren Nuten 2 dieses ersten Systems zur obersten Nut 2 und anschließend über die Verbindungsnut 6 zur obersten Nut 3 des zweiten Systems und von dort über die weiteren Nuten 3 in die unterste Nut 3 geführt wird, wo er über die Öffnung 8 austritt. Eine solche Anordnung hat den Vorteil, daß ein Temperaturausgleich über die Oberfläche des Grundkörpers 1 erfolgt, da das Wärmeträgermedium in der untersten Nut 2 des ersten Systems die größte Temperatur, in der untersten Nut 3 des zweiten Systems hingegen infolge der zwischenzeitlich erfolgten Wärmeabgabe die kleinste Temperatur vor dem Austritt aufweist.

Bei Anwendung des erfindungsgemäßen Elementes für eine Beheizung von Räumen wird zweckmäßig so vorgegangen, daß der Grundkörper 1 an einer Wand, beispielsweise durch Anschrauben, befestigt wird, daß hierauf in die Nuten 2,3, die bogenförmigen Vertiefungen 4,5 und die Öffnungen 7,8 ein biegbarer, ein Wärmeträgermedium transportierender Schlauch in der beschriebenen Weise eingelegt wird, daß hierauf die Nuten mit Mörtel od.dgl. verschlossen und damit der Schlauch fixiert wird und anschließend eine Verkleidung mit einem keramischen Material erfolgt.

In der Zeichnung ist ein Element mit einem ebenen Grundkörper dargestellt. Der Grundkörper 1 kann aber auch eine gekrümmte Form aufweisen, sodaß das Element auch für die Anbringung an gekrümmten Wandflächen, beispielsweise an abgerundeten Wandflächen, Säulen od.dgl. verwendet werden kann. Der Grundkörper 1 besteht beispielsweise aus Beton, kann jedoch auch aus einem anderen Material hergestellt sein.

## Patentansprüche

1. Element für eine Anlage zur Klimatisierung, insbesondere zur Beheizung, von Räumen, mit in einem Grundkörper (1) angeordneten Nuten (2, 3), die endseitig durch bogenförmige Vertiefungen (4, 5) miteinander verbunden sind, wobei in die Nuten (2, 3) und bogenförmigen Vertiefungen (4, 5) biegbare Heiz- und/oder Kühlelemente, insbesondere ein flüssiges oder gasförmiges Wärmeträgermedium enthaltende biegbare Schläuche oder elektrische Heizleiter, einsetzbar sind, dadurch gekennzeichnet, daß zwischen den ein erstes System bildenden Nuten (2) weitere, ein zweites System bildende Nuten (3) vorgesehen sind, die gleichfalls endseitig über weitere bogenförmige Vertiefungen (5) miteinander verbunden sind, und daß zumindest an den Kreuzungspunkten die Nuten (3) und/oder schlaufenförmigen Vertiefungen des einen Systems tiefer liegen als die Nuten und/oder schlaufenförmigen Vertiefungen (5) des anderen Systems. (Fig.2)

2. Element nach Anspruch 1, dadurch gekennzeichnet, daß die bogenförmigen Vertiefungen (4) des ersten Systems gegenüber den bogenförmigen Vertiefungen (5) des zweiten Systems versetzt angeordnet sind.

3. Element nach Anspruch 1, dadurch gekennzeichnet, daß die Nuten (2, 3) beider Systeme zueinander parallel und vorzugsweise in gleichen Abständen angeordnet sind.

4. Element nach Anspruch 1, 2 oder 3, dadurch gekennzeichnet, daß die beiden Systeme in Serie geschaltet sind.

5. Element nach einem der Ansprüche 1 bis 4, dadurch gekennzeichnet, daß die Nuten (2, 3) beider Systeme im wesentlichen waagrecht in vertikalem Abstand voneinander angeordnet sind, wobei die oberste Nut (2) des einen Systems mit der obersten Nut (3) des anderen Systems in Verbindung steht, und die untersten Nuten (2, 3) beider Systeme mit Öffnungen (7, 8) für die Zuleitung bzw. Ableitung der Heiz- und/oder Kühlelemente versehen sind.
